# FASCICULE DE BREVET EUROPEEN

(11) **EP 2 086 772 B1**
(45) Date de publication et mention de la délivrance du brevet: **04.09.2013**
(21) Numéro de dépôt: 07822384.9
(22) Date de dépôt: 08.11.2007
(51) Int. Cl.: B60B 35/04, B62D 65/12, B60G 21/05

(54) **ASSEMBLAGE D'UN ESSIEU ARRIÈRE DE VÉHICULE**
ZUSAMMENBAU EINER FAHRZEUGHINTERACHSE
ASSEMEBLY OF A VEHICLE REAR AXLE

(30) Priorité: 09.11.2006 FR 0609783
(43) Date de publication de la demande: 12.08.2009
(73) Titulaire: Renault SAS, 92100 Boulogne Billancourt (FR)
(72) Inventeur: CRIQUI, Bernard, 92150 Suresnes (FR); FAYS, Samuel, 91190 Gif Sur Yvette (FR)
(86) Numéro de dépôt international: PCT/EP2007/062082
(87) Numéro de publication internationale: WO 2008/055958

(56) Documents cités:
- EP-A2- 1 036 680
- WO-A-98/47729
- FR-A- 2 888 559

## Description

L'invention concerne les trains roulants des véhicules automobiles, et en particulier les essieux arrière de ces véhicules,

De nombreux véhicules automobiles sont équipés d'un essieu arrière comprenant deux bras tirés longitudinaux reliés entre eux par une traverse tubulaire en acier, utilisée comme axe de barre de torsion. La résistance à la torsion, la résistance au pincement positif et la résistance au carrossage sont déterminées dans une grande mesure par cette poutre transversale encastrée dans les bras tirés. Les bras tirés sont destinés à supporter des fusées de roues.

Un procédé d'assemblage connu de la traverse aux bras tirés fait appel à un collage au moyen d'un adhésif. Le bras tiré auquel la traverse doit être assemblée présente un alésage. La surface intérieure de l'alésage est encollée. Une extrémité axiale de la traverse est également encollée. Afin d'accroître la résistance mécanique de l'assemblage, l'ajustement entre l'alésage du bras tiré et l'extrémité de la traverse est déterminé de sorte que l'épaisseur finale de l'adhésif soit réduite. Du fait de cet ajustement, un positionnement précis entre la traverse et le bras tiré est nécessaire pour procéder à l'insertion de l'extrémité de la traverse dans l'alésage. Malgré cette précision, cette étape d'insertion fait courir le risque de racler l'adhésif disposé sur les surfaces à assembler. Ce raclage peut conduire à des lacunes d'adhésif, et par conséquent à une rupture de l'assemblage lors de l'application d'une charge. Afin d'accélérer la solidification de l'adhésif après l'insertion et afin de contrôler le fluage de l'adhésif, le procédé inclut également une étape de réticulation partielle par induction des couches d'adhésif avant l'étape d'insertion.

Afin de limiter les risques de défaut d'assemblage, un perfectionnement de ce procédé a conduit à appliquer une quantité d'adhésif en excès, puis à effectuer un contrôle non destructif de cet assemblage. Ce perfectionnement renchérit cependant le coût du procédé d'assemblage.

Il est connu, par le document EP 1 036 680 qui répresente l'état de la technique le plus proche un assemblage d'une traverse à deux bras d'un essieu par collage des extrémités de la traverse dans des logements ménagés dans les bras, un espace annulaire étant réalisé entre les extrémités de la traverse et les logements. Une telle configuration peut être difficile à maîtriser, relativement au dimensionnement de l'espace qui peut être critique dans les performances mécaniques de la colle.

On connait également, par le document FR 2 888 559, un procédé d'assemblage d'une traverse aux bras d'un essieu par encollage de portions d'extrémité de traverse et déformation des dites portions dans un jeu laissé entre les portions et les logements des bras, la déformation étant réalisée par l'intermédiaire d'un générateur d'impulsions électromagnétique, ce qui rend la solution coûteuse.

L'invention vise à résoudre un ou plusieurs de ces inconvénients. L'invention porte ainsi sur un procédé d'assemblage selon la revendication 1 d'un bras tiré d'essieu arrière de véhicule à une traverse de barre de torsion, comprenant les étapes suivantes :
- appliquer un adhésif sur la surface intérieure d'un alésage du bras tiré et/ou sur la surface périphérique d'une extrémité axiale de la traverse ;
- insérer l'extrémité de la traverse dans l'alésage du bras tiré ;
- expanser l'extrémité de la traverse jusqu'à ce que l'adhésif appliqué joigne la surface intérieure de l'alésage à la surface périphérique de l'extrémité de la traverse.

Selon l'invention, l'expansion de l'extrémité de la traverse comprend le flambage de l'extrémité de la traverse.

Selon une variante, le flambage est réalisé en bridant par serrage une partie intermédiaire de la traverse et en appliquant un effort de compression axial sur l'extrémité de la traverse.

Selon encore une variante, le procédé comprend le maintien d'un noyau ajusté à la surface intérieure de la partie intermédiaire durant le bridage par serrage.

Selon encore une autre variante, la surface intérieure de l'alésage présente un chambrage.

Selon une variante, le procédé est appliqué à une traverse dont ladite extrémité est de forme tubulaire.

Selon une autre variante, la surface périphérique de l'extrémité est initialement cylindrique.

Selon encore une variante le procédé comprend en outre les étapes suivantes :
- appliquer un adhésif sur la surface intérieure d'un alésage d'un autre bras tiré et/ou sur la surface périphérique d'une autre extrémité axiale de la traverse ;
- insérer l'autre extrémité de la traverse dans l'alésage de l'autre bras tiré ;
- brider par serrage une autre partie intermédiaire de la traverse ;
- appliquer simultanément un effort de compression axial sur les extrémités de la traverse.

L'invention porte également sur un essieu arrière selon la revendication 8 de véhicule automobile, comprenant un bras tiré et une traverse de barre de torsion selon la revendication 4. assemblés selon un des procédés ci-dessus, appliqué à une surface intérieure d'alésage présentant un chambrage.

D'autres caractéristiques et avantages de l'invention ressortiront clairement de la description qui en est faite ci-après, à titre indicatif et nullement limitatif, en référence aux dessins annexés, dans lesquels :
- la figure 1 illustre une vue en perspective de bras tirés reliés par une traverse de barre de torsion ;
- la figure 2 illustre une vue en coupe d'un bras tiré et de l'extrémité d'une traverse avant leur assemblage ;
- les figures 3 à 5 illustrent des vues en coupe du bras tiré et de l'extrémité de la traverse durant plusieurs étapes d'un procédé d'assemblage selon l'invention ;
- la figure 6 illustre une vue en coupe de bras tirés et d'une traverse dans différentes étapes d'une variante d'un procédé d'assemblage.

L'invention propose d'expanser une extrémité d'une traverse d'une barre de torsion dans un alésage d'un bras tiré, après avoir appliqué un adhésif sur au moins une des surfaces à assembler.

Le procédé proposé permet de ne pas effectuer de réticulation de l'adhésif après avoir inséré l'extrémité de la traverse dans l'alésage. Le procédé garantit également l'absence de raclage durant l'insertion de l'extrémité de la traverse dans l'alésage. Le procédé permet en outre de limiter la quantité d'adhésif appliquée en excès sur une des surfaces à assembler.

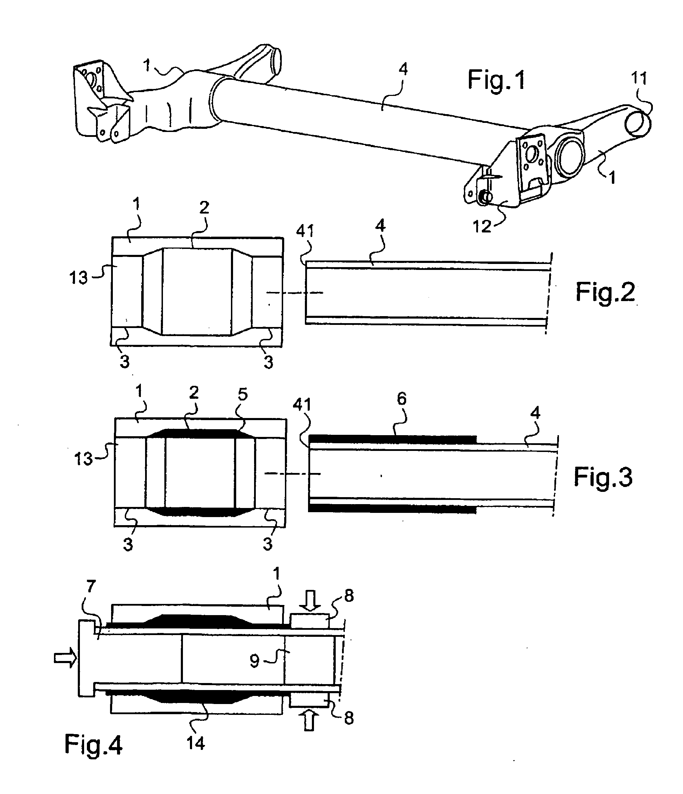

La figure 1 est une vue en perspective d'une partie d'un essieu arrière. Cet essieu arrière comprend deux bras tirés 1. Les bras tirés 1 sont encastrés sur des extrémités axiales respectives d'une traverse 4 d'une barre de torsion. Chaque bras tiré 1 présente une partie 11 destinée à supporter une fusée de roue. Chaque bras tiré 1 présente de plus une partie 12 de liaison du bras avec le châssis du véhicule. Les parties 11 et 12 sont disposées de part et d'autre de l'axe de la traverse 4.

De façon connue en soi, la traverse 4 est adaptée pour subir une torsion compatible avec les exigences de tenue de route d'un véhicule. De façon connue en soi, la traverse 4 est également adaptée pour présenter un allongement ou une contraction limités suivant son axe.

La figure 2 est une vue en coupe d'un bras tiré 1 et de l'extrémité 41 de la traverse 4 avant leur assemblage. Le bras tiré 1 présente un alésage 13 dont l'axe est placé dans l'alignement de l'axe de la traverse 4. La surface intérieure de l'alésage 13 présente deux portées 3 de même section et un chambrage 2. Dans l'exemple, les différentes parties de l'alésage 13 sont de section circulaire mais on pourrait également envisager un alésage 13 présentant des sections de forme autre. Le bras tiré 1 peut être une pièce de fonderie dont les portées 3 ont été usinées. L'extrémité 41 de la traverse 4 présente avantageusement une forme tubulaire, dont l'intérieur est accessible depuis l'extérieur.

Sur la figure 3, les couches d'adhésif 5 et 6 ont été appliquées respectivement sur la surface intérieure de l'alésage 13 et sur la surface périphérique de l'extrémité axiale 41. Bien que l'exemple illustre l'application de l'adhésif sur ces deux surfaces, on pourrait également envisager que l'adhésif ne soit appliqué que sur l'une d'entre elles. Dans l'exemple, la couche d'adhésif n'est pas appliquée sur les portées 3. La couche d'adhésif 5 est appliquée dans le chambrage 2 qui forme ainsi un réservoir d'adhésif destiné à fluer ultérieurement. De plus, la couche 5 incluse dans le chambrage 2 est moins sujette au raclement par l'extrémité 41. L'homme du métier saura déterminer un adhésif approprié.

Sur la figure 4, l'extrémité axiale 41 a été insérée dans l'alésage 13. L'épaisseur de la couche 6 et le jeu de l'ajustement entre l'extrémité axiale 41 et l'alésage 13 sont définis pour limiter le raclage de la couche d'adhésif 6 contre le bord de l'alésage 13.

Dans l'exemple illustré, l'expansion de l'extrémité 41 est réalisée par flambage de cette extrémité. Afin d'expanser l'extrémité 41, on a bridé par serrage une partie intermédiaire de la traverse 4 et on a ensuite appliqué un effort de compression axial sur l'extrémité 41. L'extrémité 41 est ainsi sujette au flambage entre la zone de serrage et la zone d'application de la compression axiale. A cet effet, un outil de presse 7 exerce l'effort de compression axiale sur l'extrémité 41. Un outil de bridage comprend deux demi-coquilles 8 qui serrent une partie intermédiaire de la traverse 4 afin de la brider axialement par friction. L'homme du métier saura déterminer l'effort de compression axial de flambage en fonction du dimensionnement de l'extrémité 41.

L'outil 7 présente une section s'ajustant à l'intérieur de l'extrémité 41. Ainsi, on empêche que le flambage ne se traduise localement par une boursouflure vers l'intérieur de l'extrémité 41. De façon similaire, un noyau 9 s'ajuste à l'intérieur de la traverse 4 au niveau de la partie intermédiaire pour éviter sa déformation lors du serrage par l'outil de bridage. Le noyau 9 pourra être solidaire de l'outil 7 afin de faciliter le processus d'assemblage.

Durant le flambage, l'extrémité 41 s'expanse pour comprimer l'adhésif 14 contre la surface intérieure de l'alésage 13, assurant ainsi une bonne répartition de cet adhésif 14 par fluage. Cette compression rend superflue une étape de réticulation partielle préalable de l'adhésif appliqué.

En particulier, une partie de l'extrémité 41 se déforme pour épouser la forme du chambrage 2. Ainsi, outre la fixation par l'adhésif 41 après sa solidification, on dispose d'épaulements sur l'extrémité 41 qui participent à la résistance de l'assemblage et éliminent le risque de désenmanchement.

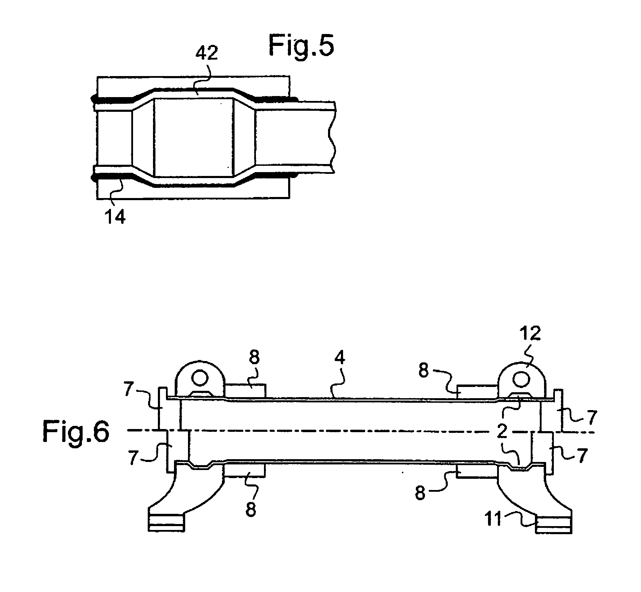

L'extrémité 41 qui dépassait de l'alésage 13 à la figure 4, est affleurante avec le bord de l'alésage 13 à la figure 5. En effet, le fluage illustré à la figure 5 réduit la longueur de l'extrémité 41.

La figure 6 illustre une variante du procédé d'assemblage, dans laquelle on expanse simultanément les deux extrémités axiales de la traverse 4 dans des alésages de bras tirés 1 respectifs. La partie haute illustre la forme de la traverse avant flambage, la partie basse illustre la forme de cette même traverse après flambage. Comme décrit auparavant, on applique un adhésif sur la surface périphérique de l'autre extrémité de la traverse 4 et/ou sur la surface intérieure de l'alésage d'un autre bras tiré 1. Cette autre extrémité est insérée dans l'alésage de l'autre bras tiré. Selon cette variante, un effort de compression axial est appliqué simultanément sur les deux extrémités de la traverse. On peut ainsi réaliser l'assemblage simultané de deux bras tirés 1 sur la traverse 4. Les bras tirés sont maintenus dans la position souhaitée durant le procédé d'assemblage.

Bien qu'on ait illustré un procédé d'expansion par fluage, on pourrait également envisager un procédé d'expansion par application d'une pression hydraulique interne au tube pour réduire l'effort de poussée axiale des extrémités de la traverse.

## Revendications

1. Procédé d'assemblage d'un bras tiré (1) d'essieu arrière de véhicule à une traverse (4) de barre de torsion, comprenant les étapes suivantes :
- appliquer un adhésif (5,6) sur la surface intérieure d'un alésage (13) du bras tiré et/ou sur la surface périphérique d'une extrémité axiale (41) de la traverse ;
- insérer l'extrémité (41) de la traverse dans l'alésage du bras tiré ;
- expanser l'extrémité de la traverse jusqu'à ce que l'adhésif appliqué (5,6) joigne la surface intérieure de l'alésage à la surface périphérique de l'extrémité de la traverse,
- **caractérisé en ce que** l'expansion de l'extrémité de la traverse comprend le flambage de l'extrémité de la traverse.

2. Procédé d'assemblage selon la revendication 1, dans lequel le flambage est réalisé en bridant par serrage une partie intermédiaire de la traverse (4) et en appliquant un effort de compression axial sur l'extrémité (41) de la traverse.

3. Procédé d'assemblage selon la revendication 2, comprenant le maintien d'un noyau (9) ajusté à la surface intérieure de la partie intermédiaire durant le bridage par serrage.

4. Procédé d'assemblage selon l'une quelconque des revendications précédentes, dans lequel la surface intérieure (13) de l'alésage présente un chambrage (2).

5. Procédé d'assemblage selon l'une quelconque des revendications précédentes, appliqué à une traverse (4) dont ladite extrémité est de forme tubulaire.

6. Procédé d'assemblage selon l'une quelconque des revendications précédentes, dans lequel la surface périphérique de l'extrémité (41) est initialement cylindrique.

7. Procédé d'assemblage selon la revendication 2 ou 3, comprenant en outre les étapes suivantes :
- appliquer un adhésif (5) sur la surface intérieure d'un alésage d'un autre bras tiré et/ou sur la surface périphérique d'une autre extrémité axiale de la traverse ;
- insérer l'autre extrémité de la traverse dans l'alésage de l'autre bras tiré ;
- brider par serrage une autre partie intermédiaire de la traverse ;
- appliquer simultanément un effort de compression axial sur les extrémités (41) de la traverse (4).

8. Essieu arrière de véhicule automobile, **caractérisé en ce qu'**il comprend un bras tiré (1) et une traverse (4) de barre de torsion assemblés selon le procédé de la revendication 4.

## Patentansprüche

1. Zusammenbauverfahren eines Längslenkers (1) einer Fahrzeughinterachse mit Torsionsstangen-Querträger (4), das die folgenden Schritte aufweist:
- Aufbringen eines Klebstoffs (5, 6) auf der inneren Oberfläche einer Bohrung (13) des Längslenkers und/oder auf der umfänglichen Oberfläche eines axialen Endes (41) des Querträgers,
- Einfügen des Endes (41) des Querträgers in die Bohrung des Längslenkers;
- Dehnen des Endes des Querträgers, bis der aufgetragene Klebstoff (5, 6) die innere Oberfläche der Bohrung mit der umfänglichen Oberfläche des Endes des Querträgers verbindet,
- **dadurch gekennzeichnet, dass** das Dehnen des Endes des Querträgers das Knicken des Endes des Querträgers umfasst.

2. Zusammenbauverfahren nach Anspruch 1, bei dem das Knicken ausgeführt wird, indem durch Spannen ein Zwischenteil des Querträgers (4) verflanscht und eine axiale Druckkraft auf das Ende (41) des Querträgers angelegt wird.

3. Zusammenbauverfahren nach Anspruch 2, das das Halten eines Kerns (9), der an die innere Oberfläche des Zwischenteils justiert ist, während des Verflanschens durch Spannen aufweist.

4. Zusammenbauverfahren nach einem der vorhergehenden Ansprüche, bei dem die innere Oberfläche (13) der Bohrung eine Einsenkung (2) aufweist.

5. Zusammenbauverfahren nach einem der vorhergehenden Ansprüche, das an einen Querträger (4), dessen Ende röhrenförmige Form hat, angewandt wird.

6. Zusammenbauverfahren nach einem der vorhergehenden Ansprüche, bei dem die umfängliche Oberfläche des Endes (41) ursprünglich zylindrisch ist.

7. Zusammenbauverfahren nach Anspruch 2 oder 3, das ferner die folgenden Schritte aufweist:
- Aufbringen eines Klebstoffs (5) auf die innere Oberfläche einer Bohrung eines anderen Längslenkers und/oder auf der umfänglichen Oberfläche eines anderen axialen Endes des Querträgers,
- Einfügen des anderen Endes des Querträgers in die Bohrung des anderen Längslenkers,
- Verflanschen durch Spannen eines anderen Zwischenteils des Querträgers,
- gleichzeitiges Anlegen einer axialen Druckkraft auf die Enden (41) des Querträgers (4).

8. Fahrzeughinterachse, **dadurch gekennzeichnet, dass** sie einen Längslenker (1) und einen Torsionsstangen-Querträger (4) aufweist, die gemäß dem Verfahren des Anspruchs 4 zusammengefügt sind.

## Claims

1. Method of assembling a trailing arm (1) of a vehicle rear axle to a torsion bar crossmember (4), comprising the following steps:
- applying an adhesive (5, 6) to the inner surface of a bore (13) of the trailing arm and/or to the peripheral surface of an axial end (41) of the crossmember;
- inserting the end (41) of the crossmember into the bore of the trailing arm;
- expanding the end of the crossmember until the adhesive applied (5, 6) joins the inner surface of the bore to the peripheral surface of the end of the crossmember,
- **characterized in that** the expansion of the end of the crossmember comprises the buckling of the end of the crossmember.

2. Assembly method according to Claim 1, in which the buckling is achieved by fastening by clamping an intermediate part of the crossmember (4) and by applying an axial compression force to the end (41) of the crossmember.

3. Assembly method according to Claim 2, comprising holding in place a core (9) adjusted to the inner surface of the intermediate part during the fastening by clamping.

4. Assembly method according to any one of the preceding claims, in which the inner surface (13) of the bore has a recess (2).

5. Assembly method according to any one of the preceding claims, applied to a crossmember (4) of which the said end is of tubular shape.

6. Assembly method according to any one of the preceding claims, in which the peripheral surface of the end (41) is initially cylindrical.

7. Assembly method according to Claim 2 or 3, additionally comprising the following steps:
- applying an adhesive (5) to the inner surface of a bore of another trailing arm and/or to the peripheral surface of another axial end of the crossmember;
- inserting the other end of the crossmember into the bore of the other trailing arm;
- fastening by clamping another intermediate part of the crossmember;
- simultaneously applying an axial compression force to the ends (41) of the crossmember (4).

8. Motor vehicle rear axle, **characterized in that** it comprises a trailing arm (1) and a torsion bar crossmember (4) which are assembled according to the method of Claim 4.
